# FASCICULE DE BREVET EUROPEEN

(11) **EP 2 084 927 B1**
(45) Date de publication et mention de la délivrance du brevet: **17.02.2021**
(21) Numéro de dépôt: 07858594.0
(22) Date de dépôt: 16.10.2007
(51) Int. Cl.: H04W 48/08, H04W 12/08, H04W 84/04, H04W 16/16, H04W 12/00, H04W 48/16

(54) **PROCEDE ET SYSTEME DE MOBILITE PERSONNALISEE PAR L'UTILISATEUR DANS UN SYSTEME DE COMMUNICATION MOBILE**
BENUTZERANGEPASSTES MOBILITÄTSVERFAHREN UND SYSTEM IN EINEM MOBILKOMMUNIKATIONSSYSTEM
USER-CUSTOMIZED MOBILITY METHOD AND SYSTEM IN A MOBILE COMMUNICATION SYSTEM

(30) Priorité: 17.10.2006 FR 0654327
(43) Date de publication de la demande: 05.08.2009
(73) Titulaire: ORANGE, 75015 Paris (FR)
(72) Inventeur: KARIM, Fatima, 75013 Paris (FR); BEN JEMAA, Sana, 92130 Issy Les Moulineaux (FR)
(74) Mandataire: Cabinet Beau de Loménie
(86) Numéro de dépôt international: PCT/FR2007/052168
(87) Numéro de publication internationale: WO 2008/047040

(56) Documents cités:
- WO-A-00/18168
- WO-A-02/28124
- WO-A-99/14974
- WO-A-03/085992
- WO-A-2005/120017
- US-A- 5 924 038

## Description

### Arrière-plan de l'invention

L'invention se situe dans le domaine des réseaux de télécommunication mobile offrant des procédures de mobilité entre les cellules.

Elle s'applique en particulier aux réseaux UTRAN (UMTS Terrestrial Radio Access Network) et GERAN (GSM Edge Radio Access Network).

De façon connue, dans de tels réseaux, les terminaux de télécommunication mobile essaient de se connecter, en situation de mobilité, aux cellules dont les identifiants sont contenus dans une liste gérée par ces terminaux. Cette liste contient les identités des cellules à mesurer par le mobile.

Selon un mécanisme connu, les terminaux mobiles effectuent des mesures (notamment des mesures de champ) sur chacune des cellules identifiées dans la liste, et sélectionnent celle dont le niveau de mesure est maximal.

Dans la norme 3GPP (Third Generation Partnership Project), cette liste est stockée, dans le terminal mobile, dans une variable nommée CELL-INFO-LIST.

La liste des cellules à mesurer par le mobile est constituée à partir des informations sur les cellules voisines reçues par le terminal mobile soit de sa cellule de rattachement (i.e. de la cellule sur laquelle il campe, dans le cas d'un mécanisme de re-sélection), soit à partir d'une entité du réseau contrôlant les stations de base (connue sous le nom de RNC pour "Radio Network Controller), dans le cas d'un transfert entre les cellules (mécanisme de "handover" ou de mobilité en mode connecté).

Lorsque le mobile est en mode veille, la liste des cellules voisines reçue par un terminal mobile est diffusée par le réseau. Ce message est connu sous le nom de SI B 11 (System Information Block 11).

Lorsque le mobile est en mode connecté (i.e. en cours de communication), la liste des cellules voisines est envoyée à ce mobile, dans un message nommé Measurement Control.

L'invention vise particulièrement les réseaux offrant des procédures de mobilité vers des cellules à accès restreint, c'est-à-dire à des cellules dont l'accès est réservé à un ensemble fermé d'utilisateurs.

Les cellules à accès restreint sont typiquement utilisées dans un cadre résidentiel ou professionnel.

Les mécanismes présentés précédemment, par lesquels le réseau informe un terminal mobile de la liste de ses cellules voisines, ne peuvent être utilisés pour présenter, à ce terminal, la liste de ses cellules voisines à accès restreint.

En effet, la liste des cellules voisines, contenue dans les messages SIB 11 et SIB 12 ne dépend ni du terminal mobile auquel elle est diffusée ou envoyée, ni de l'utilisateur de ce terminal. Autrement dit, ces messages sont identiques pour tous les terminaux attachés à la même cellule serveuse ou au même RNC.

En conséquence, si ces messages étaient utilisés, dans l'état actuel de la technique, pour communiquer des identifiants de cellules à accès restreint, ces identifiants seraient également reçus par des terminaux dont l'accès leur est interdit, ce qui poserait deux inconvénients.

Tout d'abord, les terminaux mobiles effectueraient des mesures inutiles sur ces cellules pour essayer de s'y connecter, puisque l'accès leur serait in fine refusé.

Par ailleurs, le nombre d'identifiants pouvant être contenus dans la liste gérée par un terminal est limité (32 en intra-fréquence dans le cas de la variable CELL-INFO-LIST). Or il est raisonnable de penser que dans certaines zones géographiques, dans lesquelles un grand nombre de cellules à accès restreint peuvent être installées, ce nombre est relativement petit. Et qu'il est fortement souhaitable de ne pas encombrer la liste par des identifiants de cellule dont l'accès au terminal est de toute façon impossible car interdit.

Le document WO2005/120017 décrit un dispositif permettant de supporter un handover d'une session de télécommunication entre un réseau sans fil licencié et un réseau sans fil non licencié.

Le document WO 02/28124 décrit un procédé de mise à jour automatique d'informations relatives à un système de télécommunication privé sans fil au niveau de terminaux mobiles.

Le document WO 00/018168 décrit un système et un procédé pour transmettre automatiquement à des stations mobiles un ensemble de fréquences utilisés par un système sans fil de bureau (WOS).

### Objet et résumé de l'invention

Selon un premier aspect, l'invention concerne un serveur tel que défini par la revendication 1.

Par zone de détection on entend une zone géographique se trouvant à proximité de la zone de couverture radio de la cellule à accès restreint.

Le serveur mentionné ci-dessus peut par exemple être constitué par une entité RNC.

Il peut aussi être contenu dans une entité OMC (Opérations and Maintenance Center), entité de supervision et de contrôle des RNC.

Corrélativement, l'invention concerne un procédé de paramétrage d'un terminal mobile, tel que défini par la revendication.

D'une façon générale, l'invention permet de personnaliser la liste des cellules voisines du terminal de communication, regroupant l'ensemble des cellules potentielles auxquelles le terminal peut essayer de se connecter, en prenant en compte des cellules cibles privilégiées pour ce terminal.

En corollaire, et de façon très avantageuse, seuls les terminaux mobiles ayant accès à cette cellule essaient de s'y connecter.

Cette caractéristique permet de limiter les tentatives d'accès aux seules cellules autorisées pour un utilisateur donné.

Ces avantages sont obtenus grâce à une approche nouvelle et inventive de l'invention, qui consiste à opérer une gestion centralisée des données relatives à un réseau cellulaire public et à un réseau de cellules à accès restreint, alors même que ces deux réseaux peuvent être gérés par des opérateurs distincts.

Une telle gestion centralisée repose sur l'existence d'une base de données, dans un serveur du réseau cellulaire public, dans laquelle sont mémorisés en relation les identifiants d'utilisateurs, les identifiants de cellules à accès restreint auxquelles ils sont autorisés à accéder, et les identifiants de zones de détection associées.

Conformément à l'invention, le serveur détecte que le terminal mobile se trouve dans une zone de détection d'une cellule à accès restreint, mais autorisé à un utilisateur du terminal. C'est alors que le serveur envoie au terminal mobile l'identifiant de la cellule à accès restreint.

Le terminal mobile ajoute alors le ou les identifiants(s) de cellule à accès restreint reçu(s) du serveur dans sa liste de cellules potentielles (Cell nfoList). L'identifiant de cellule à accès restreint peut être transmis par le RNC au terminal mobile sous la forme d'un message Measurement Control.

Conformément à l'invention, la zone de détection correspond à la zone de couverture d'une cellule du réseau.

Une cellule peut notamment être une macro-cellule d'un réseau public de type GSM ("Groupe Spécial Mobile") ou UMTS ("Universal Mobile Télécommunication System"). Il peut également s'agir d'une micro-cellule de ces réseaux. On rappelle que la zone de couverture d'une micro-cellule a généralement une portée de l'ordre de la centaine de mètres. Une micro-cellule peut être déployée pour absorber localement une zone de fort trafic de communications (par exemple sur un rond-point ou une position particulière d'un axe routier).

Ainsi, lorsque le serveur détecte que le terminal se trouve sous la couverture d'une de ces cellules (macro ou micro), il envoie un message (par exemple Measurement Control) au terminal, déclenchant l'ajout par ce dernier, dans la liste des cellules potentielles, de l'identifiant des cellules à accès restreint qui se trouvent dans le voisinage de cette cellule, de sorte que le terminal essaie de se connecter à ces cellules privilégiées, lors de ces mécanismes de transfert.

A partir du moment où l'identifiant de la cellule à accès restreint est ajouté à la liste des cellules potentielles, le terminal mobile peut effectuer des mesures (mesures de champ notamment) sur ces cellules. Un paramètre adéquat des algorithmes de mobilité permet de favoriser la mobilité du mobile vers ces cellules à accès restreint.

Selon un autre aspect, l'invention concerne un système comprenant ledit serveur ainsi qu'un point d'accès à une cellule à accès restreint d'un réseau cellulaire, tel que défini dans la revendication 7.

Dans un mode de réalisation de l'invention, le système comprend un terminal mobile d'un utilisateur autorisé à accéder à la cellule à accès restreint.

Dans un autre mode de réalisation de l'invention, le serveur envoie également au terminal mobile, outre l'identifiant de la cellule à accès restreint, un identifiant de la zone de détection de cette cellule à accès restreint. Cet envoi est effectué par le serveur de manière périodique (par exemple une fois par mois) et/ou en cas de changement de l'un au moins des identifiants mémorisés dans les moyens de stockage (par exemple si une nouvelle cellule à accès restreint devient autorisée à l'utilisateur du terminal mobile, ou en cas de changement d'un identifiant de la zone de détection associée à une cellule à accès restreint).

Dans ce mode de réalisation, le terminal de communication mobile du système selon l'invention comporte :
- une base de données associant au moins un identifiant d'une zone de détection avec au moins un identifiant d'une cellule à accès restreint, mais autorisé à un utilisateur du terminal ;
- des moyens pour détecter que le terminal se trouve dans la zone de détection ; et
- des moyens pour ajouter l'identifiant de la cellule à accès restreint dans la liste consécutivement à la détection.

Dans un mode particulier de réalisation, la base de données est mémorisée dans un objet portatif incluant un microcontrôleur, cet objet pouvant être incorporé et lu par le terminal de télécommunication mobile. Cette carte à microcircuit comporte une base de données associant au moins une zone de détection à au moins un identifiant d'une cellule à accès restreint.

Cette objet peut être une carte SIM ("Subscriber Identity Module"), ou encore USIM ("UMTS Subscriber Identity Module").

Ainsi, lorsque le terminal détecte qu'il se trouve dans la zone de détection, il ajoute l'identifiant de la cellule à accès restreint à laquelle il a accès dans la liste des cellules potentielles auxquelles il peut essayer de se connecter.

Dans un scénario conforme à l'invention, l'identifiant de l'utilisateur, l'identifiant de la cellule à accès restreint et les identifiants des cellules au voisinage de la cellule d'accès restreint sont reçus en provenance d'un point d'accès à la cellule à accès restreint.

Dans un scénario d'utilisation de l'invention, lorsque l'utilisateur installe son point d'accès, par exemple une passerelle résidentielle, ce point d'accès détecte automatiquement les cellules publiques dans son voisinage, et envoie les identifiants de ces cellules publiques au serveur selon l'invention.

Dans un mode particulier de réalisation de l'invention, le serveur envoie l'identifiant de la cellule et l'identifiant de la cellule à accès restreint au terminal mobile, dans un message conforme au format SMS ("Short Message Service").

Sur réception de ce message, le terminal mobile conforme à l'invention enregistre ces informations dans sa base de données.

Dans une première variante de réalisation de l'invention, le serveur selon l'invention ne conserve pas en mémoire ces informations.

Dans une deuxième variante, il les conserve dans une base de données.

Dans un mode particulier de réalisation, les différentes étapes du procédé de paramétrage ou du procédé de configuration sont déterminées par des instructions de programmes d'ordinateurs.

Un tel programme d'ordinateur, mémorisé sur un support d'informations et susceptible d'être mis en œuvre dans un ordinateur comporte des instructions adaptées à la mise en œuvre des étapes d'un procédé de paramétrage ou d'un procédé de configuration tels que décrits ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur, comportant des instructions adaptées à la mise en œuvre des étapes d'un procédé de paramétrage tel que décrit ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy fisc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un terminal mobile et un serveur conformes à l'invention dans leur environnement ;
- la figure 2 représente un point d'accès conforme à l'invention dans son environnement ;
- les figures 3 et 4 représentent respectivement des bases de données du serveur et du terminal mobile représentés à la figure 1 ;
- la figure 5 représente, sous forme d'organigramme, les principales étapes d'un procédé de configuration conforme à l'invention dans un mode particulier de réalisation ;
- la figure 6 représente, sous forme d'organigramme, les principales étapes d'un procédé de paramétrage conforme à l'invention dans un mode particulier de réalisation ; et
- la figure 7 représente, sous forme d'organigramme, les principales étapes d'un procédé de connexion conforme à l'invention dans un mode particulier de réalisation.

### Description détaillée d'un mode de réalisation

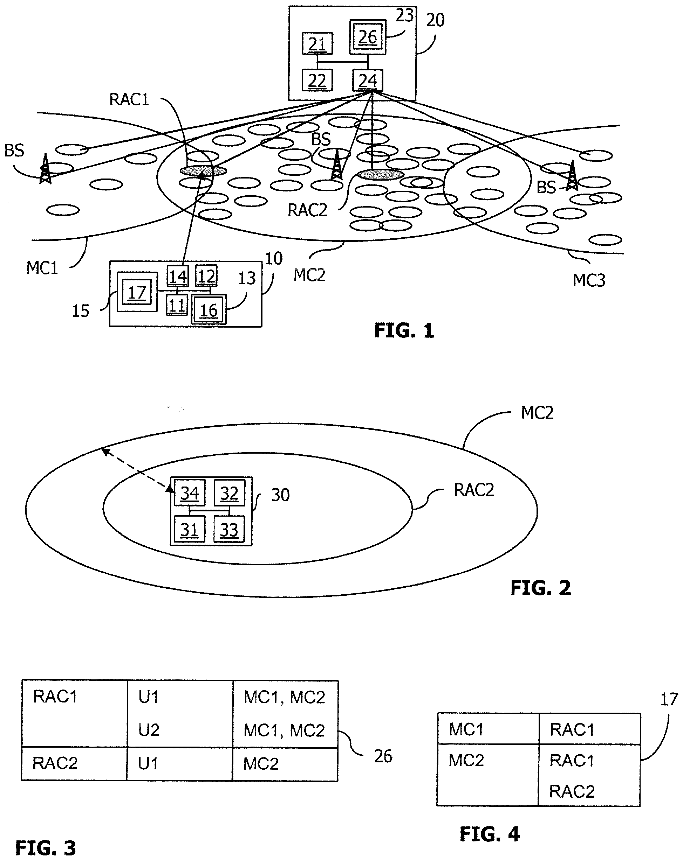

La figure 1 représente un terminal mobile 10 et un serveur 20 conformes à l'invention dans un mode particulier de réalisation.

Nous supposerons que le terminal mobile 10 est celui d'un utilisateur U1.

Sur cette figure, on a représenté trois cellules MC1, MC2 et MC3, chacune de ces cellules étant définie par la couverture d'une station de base BS.

Sur cette figure, on a représenté :
- une première cellule à accès restreint RAC1 sous la couverture des cellules MC1 et MC2 ; et
- une deuxième cellule à accès restreint RAC2 sous la couverture unique de la cellule MC2.

Dans l'exemple de réalisation décrit ici, nous supposerons que les trois stations de base sont gérées par un serveur 20 qui peut être de type RNC conforme à l'invention.

Dans l'exemple de réalisation décrit ici, le serveur 20 a l'architecture matérielle d'un ordinateur conventionnel.

Il comporte notamment un processeur 21, des moyens de communication 24, une mémoire morte de type ROM 22, et une mémoire vive de type RAM 23.

Les moyens de communication 24 lui permettent notamment de communiquer avec les trois stations de base BS et avec les points d'accès gérant les cellules à accès restreint RAC1 et RAC2.

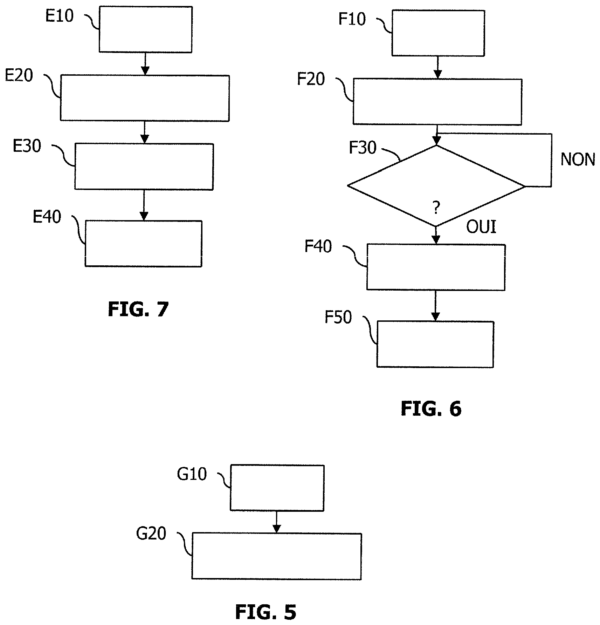

La mémoire morte 22 du serveur 20 est un support d'enregistrement dans lequel est enregistré un programme d'ordinateur comprenant des instructions pour l'exécution du procédé de paramétrage dont les principales étapes sont représentées à la figure 6.

Le terminal mobile 10 conforme à l'invention comporte un processeur 11, une mémoire morte de type ROM 12, une mémoire vive de type RAM 13, des moyens de communication 14 et une carte SIM (ou USIM) 15.

Les moyens de communication 14 permettent au terminal mobile 10 de communiquer avec les stations de base BS et avec les points d'accès 30 (non représentés sur la figure 1) aux cellules à accès restreint RAC1 et RAC2.

La mémoire morte 13 du terminal mobile 10 est un support d'enregistrement sur lequel est enregistré un programme d'ordinateur comprenant des instructions pour l'exécution des étapes du procédé de connexion conforme à l'invention et dont les principales étapes sont représentées à la figure 7.

A la figure 2, on a représenté le point d'accès 30 conforme à l'invention gérant la cellule à accès restreint RAC2.

Ce point d'accès a l'architecture d'un ordinateur conventionnel.

Il comporte un processeur 31, une mémoire morte 32 de type ROM, une mémoire vive 33 de type RAM, et des moyens de communication 34.

Conformément à l'invention, les moyens de détection 34 du point d'accès 30 sont aptes à détecter qu'il se trouve dans le voisinage de la cellule MC2. Ils sont également aptes à identifier les cellules voisines de RAC2.

De la même façon, le point d'accès de la cellule à accès restreint RAC1, non représenté ici, est apte à détecter qu'il se trouve dans le voisinage des cellules MC1 et MC2.

La mémoire morte 32 du point d'accès 30 est un support d'enregistrement sur lequel est enregistré un programme d'ordinateur conforme à l'invention, ce programme comprenant des instructions pour l'exécution des étapes du procédé de configuration conforme à l'invention et dont les principales étapes sont représentées à la figure 5.

Chacun de ces points d'accès est apte à envoyer au serveur RNC 20 la liste des identifiants de ces cellules voisines MC1, MC2 au voisinage desquelles il a détecté qu'il se trouvait et les identifiants des utilisateurs autorisés à accéder au point d'accès. Ces identifiants peuvent être par exemple le "scrambling code".

Dans le mode de réalisation décrit ici, la mémoire vive 23 du serveur 20 conforme à l'invention comporte une base de données 26 représentée à la figure 3.

Cette base de données comporte deux enregistrements, un pour la première cellule à accès restreint RAC1 et un pour la cellule à accès restreint RAC2.

En conséquence, l'enregistrement pour la première cellule à accès restreint RAC1 contient deux lignes, à savoir une ligne pour l'utilisateur U1 du terminal mobile 10 et une ligne pour un utilisateur U2.

La première ligne pour l'utilisateur U1 comporte les identifiants MC1 et MC2 des cellules MC1, MC2, ce qui signifie :
- que l'utilisateur U1 est autorisé à accéder à la cellule à accès restreint d'identifiant RAC1 ; et
- que cette cellule à accès restreint RAC1 se trouve dans le voisinage des cellules MC1 et MC2.

De même, pour l'utilisateur U2.

Enfin, l'utilisateur U1 est également autorisé à accéder à la cellule d'accès restreint d'identifiant RAC2, cette cellule se trouvant dans le voisinage de la cellule MC2.

Les informations mémorisées dans cette base de données ont pu être reçues, comme décrit précédemment, en provenance des points d'accès 30 des cellules à accès restreint RAC1 et RAC2.

Dans ce scénario, on suppose qu'au moment de l'installation d'un point d'accès 30, l'utilisateur paramètre les identifiants des utilisateurs autorisés à accéder à la cellule à accès restreint définie par ce point d'accès.

Ces informations ont aussi pu être mémorisées dans la base de données 26 directement par l'opérateur du réseau.

Dans l'exemple de réalisation décrit ici dans la figure 7, on suppose que le serveur 20 a envoyé, sur réception des informations concernant l'utilisateur U1, un SMS au terminal mobile 10 de cet utilisateur U1, les informations contenues dans ce SMS ayant été mémorisées dans la base de données 17 de la carte SIM 15 du terminal mobile 10, cette base de données étant représentée à la figure 4.

Cette base de données comporte deux enregistrements pour les cellules MC1 et MC2.

Le premier enregistrement associe l'identifiant de la cellule MC1 avec l'identifiant de la cellule à accès restreint RAC1.

Cela signifie que lorsque le terminal se trouvera dans la cellule MC1, il devra ajouter, dans la liste 16 des cellules à mesurer et auxquelles le terminal peut essayer de se connecter, l'identifiant de la cellule à accès restreint RAC1. La liste 16 peut être la liste Cell-Info-List telle que définie dans le 3GPP.

Le deuxième enregistrement de la base de données 17 associe, à la cellule MC2, les identifiants des cellules à accès restreint RAC1 et RAC2.

Cela signifie que lorsque le terminal mobile 10 se trouvera dans la zone de couverture de la cellule MC2, il devra ajouter, à la liste 16 des cellules auxquelles il peut essayer de se connecter, les identifiants des cellules à accès restreint RAC1 et RAC2.

Le SMS envoyé par le RNC 20 (ou tout autre type de message contenant l'identifiant d'une cellule à accès restreint autorisé à l'utilisateur du terminal mobile et l'identifiant d'une zone de détection associée) peut être envoyé au terminal de manière périodique, par exemple une fois par mois. Il peut également être envoyé au terminal par le RNC 20 à chaque changement le concernant dans la base de données 26.

Les principales étapes du procédé de configuration mises en œuvre par le point d'accès 30 sont représentées à la figure 5.

Au cours d'une étape G10 de ce procédé, le point d'accès 30 obtient l'identifiant de la cellule MC1 (macro-cellule ou micro-cellule) qui est dans son voisinage.

Cette étape G10 est suivie par une étape G20 au cours de laquelle le point d'accès 30 envoie l'identifiant de l'utilisateur U1, autorisé à accéder au point d'accès 30, et l'identifiant de la cellule MC1 au serveur 20.

Nous allons maintenant décrire en référence à la figure 6 les principales étapes du procédé de paramétrage conforme à l'invention, ce procédé étant mis en œuvre par le serveur 20 conforme à l'invention.

Au cours d'une première étape F10, le serveur 20 reçoit, en provenance des points d'accès 30 aux cellules à accès restreint RAC1 et RAC2, les identifiants des utilisateurs U1, U2 autorisés à accéder à ces cellules à accès restreint, les identifiants RAC1 et RAC2 de ces cellules, et les identifiants MC1 et MC2 des cellules au voisinage de ces cellules à accès restreint. Ces informations sont mémorisées dans la base de données 26 déjà décrite.

Cette étape F10 est suivie par une étape F20 au cours de laquelle le serveur 20 envoie un SMS aux terminaux mobiles, ces SMS comportant, pour chacune des cellules MC1 et MC2, les identifiants des cellules à accès restreint au voisinage de ces cellules, et auxquelles le terminal mobile 10 a droit d'accéder.

Dans le mode de réalisation décrit ici, ces informations sont mémorisées dans la carte SI M du terminal mobile 10.

Dans une variante de réalisation, les informations reçues des différents points d'accès ne sont pas conservées dans la mémoire vive 23 du serveur RNC 20.

Dans la variante de réalisation décrite ici, ces informations sont conservées.

On notera que cette étape F20 est optionnelle; le serveur 20 peut ne pas envoyer aux terminaux mobiles de message les informant des cellules à accès restreint auxquelles ils peuvent accéder dans le voisinage des cellules MC1 et MC2. Dans ce cas, le serveur passe directement de l'étape F10 à l'étape F30.

Au cours de cette étape F30, le serveur 20 détermine si le terminal mobile 10 conforme à l'invention est en mode connecté avec le réseau.

Si tel est le cas, il détermine, au cours d'une étape F40, si le terminal mobile 10 est dans l'une des cellules MC1 et MC2 et, si c'est le cas, il envoie au terminal mobile 10, au cours d'une étape F50, dans le message Measurement Control, les identifiants des cellules à accès restreint au voisinage de cette cellule et auxquelles le terminal a accès.

En l'espèce, le serveur 20 détecte que le terminal mobile 10 est connecté à la cellule MC1 lors de l'étape F40, de sorte que le message Measurement Control contient l'identifiant de la cellule à accès restreint RAC1.

On notera que, dans le cas où le point d'accès 30 envoie au serveur 20 les identifiants de plusieurs cellules situées dans son voisinage, par exemple une macro-cellule et une micro-cellule, le serveur 20 peut choisir, au cours de l'étape F10, de mémoriser en priorité, dans la base de données 26, l'identifiant de la micro-cellule, afin de définir la zone de détection associée à la cellule à accès restreint comme la zone de couverture de cette micro-cellule.

En effet, le message Measurement Control émis au cours de l'étape F50 présente une taille limite prescrite par les standards. Il est donc avantageux de veiller à ce que le serveur 20 n'envoie pas dans le message Measurement Control un trop grand nombre d'identifiants de cellules à accès restreint. Une solution à ce problème peut consister à dimensionner la zone de détection d'une cellule à accès restreint de manière adéquate, par exemple en choisissant comme zone de détection la cellule de plus petite couverture géographique.

Nous allons maintenant décrire en référence à la figure 7, les principales étapes du procédé de connexion conforme à l'invention, ce procédé étant mis en oeuvre par le terminal mobile 10.

Au cours d'une étape E10, le terminal mobile 10 reçoit le SMS envoyé par le serveur 20 conforme à l'invention, ce SMS comportant, pour chaque cellule MC1, MC2, la liste des identifiants des cellules à accès restreint RAC1, RAC2, au voisinage de ces cellules, auxquelles l'utilisateur a droit d'accéder.

Ces informations sont mémorisées, au cours d'une étape E20, dans la base de données 17 de la carte SIM 15 du terminal 10.

Lorsque le terminal 10 détecte (étape E30) qu'il se trouve dans l'une de ces cellules, il ajoute dans la liste 16 des cellules auxquelles il peut essayer de se connecter, les identifiants de ces cellules à accès restreint.

En l'espèce, sur réception du SMS, le terminal mobile 10 mémorise dans la base de données 17 l'identifiant de la cellule MC1 et l'identifiant de la cellule à accès restreint RAC1 et l'identifiant de la cellule MC2 avec l'identifiant des deux cellules à accès restreint RAC1 et RAC2. Lorsqu'il détecte qu'il se trouve dans la cellule MC1, le terminal mobile 10 ajoute l'identifiant de la cellule à accès restreint RAC1 dans la liste 16 des cellules auxquelles il peut essayer de se connecter. Lorsqu'il détecte qu'il se trouve dans la cellule MC2, le terminal mobile 10 ajoute l'identifiant des deux cellules à accès restreint RAC1 et RAC2 dans la liste 16 des cellules auxquelles il peut essayer de se connecter. A la suite, une procédure de transfert (handover) peut avoir lieu et permettre au mobile de passer sur la cellule RAC1 ou RAC2.

L'invention trouve notamment une application dans le cadre d'un service consistant à proposer aux clients, particuliers ou entreprises, d'un opérateur de communication mobile, une couverture radio (de deuxième 2G, troisième génération 3G ou au-delà B3G) à leur domicile, ou dans l'enceinte de l'entreprise, par exemple sous la forme d'une borne d'accès radio privée (résidentielle ou restreinte à l'entreprise), qui serait connectée à un modem ADSL (pour "Asynchronous Digital Subscriber Line") ou à tout autre équipement d'accès à un réseau à haut débit (par exemple de type FTTH pour "Fiber To The Home"). Le point d'accès 30 décrit ci-dessus correspond à l'association de cette borne d'accès radio privée et de l'équipement d'accès au réseau à haut débit.

Chaque particulier pourrait ainsi disposer de sa propre borne d'accès radio résidentielle, à laquelle serait associée une liste d'abonnés autorisés à y accéder (membres de la famille, amis, ...). Un mécanisme de contrôle d'accès pourrait interdire l'accès à cette borne privée aux utilisateurs ne figurant pas sur cette liste.

De même, dans le cadre professionnel, une entreprise pourrait disposer d'une ou plusieurs bornes d'accès radio situées sur son site, et dont l'accès serait limité aux seuls salariés de l'entreprise, et interdite par exemple aux visiteurs.

## Revendications

1. Serveur (20) d'un réseau cellulaire, ledit serveur étant **caractérisé en ce qu'**il comporte :
- des moyens de réception d'un identifiant d'un utilisateur (U1), d'un identifiant d'une cellule à accès restreint (RAC1) dont l'accès est réservé à une ensemble fermé d'utilisateurs et autorisé pour cet utilisateur (U1), et d'au moins un identifiant (MC1) d'une zone de détection de ladite cellule à accès restreint, ladite zone de détection correspondant à la zone de couverture d'une cellule du réseau cellulaire et étant détectée par un point d'accès à la cellule à accès restreint, lesdits identifiants de l'utilisateur, de la cellule à accès restreint et de la zone de détection étant reçus par les moyens de réception en provenance du point d'accès à ladite cellule à accès restreint ;
- des moyens de stockage (26) desdits identifiants reçus (U1, MC1, RAC1);
- des moyens (14; 24) pour envoyer, à un terminal mobile (10) dudit utilisateur (U1), ledit identifiant (RAC1) de ladite cellule à accès restreint, ledit serveur comportant en outre des moyens (21) pour détecter que ledit terminal mobile (10) se trouve dans une zone de détection d'une cellule à accès restreint, mais autorisé à un utilisateur (U1) du terminal (10) et **en ce que** lesdits moyens (14) pour envoyer ledit identifiant (RAC1) de cellule à accès restreint audit terminal mobile (10) sont activés lorsque ledit terminal mobile (10) se trouve dans ladite zone de détection.

2. Serveur selon la revendication 1, dans lequel lesdits moyens (24) pour envoyer ledit identifiant (RAC1) de ladite cellule à accès restreint permettent également d'envoyer audit terminal mobile (10) ledit identifiant (MC1) de ladite zone de détection de ladite cellule à accès restreint,
et dans lequel lesdits moyens (24) pour envoyer sont activés de manière périodique et/ou en cas de changement de l'un au moins des identifiants mémorisés dans lesdits moyens de stockage (26).

3. Serveur selon la revendication 1 dans lequel les moyens pour envoyer sont configurés pour envoyer au terminal mobile ledit identifiant de la cellule à accès restreint et ledit identifiant de la zone de détection de ladite cellule à accès restreint dans un message sur le réseau cellulaire.

4. Serveur selon la revendication 1 ou 2 dans lequel les moyens pour envoyer sont configurés pour envoyer au terminal mobile, sur le réseau cellulaire, un message déclenchant l'ajout, par ledit terminal mobile, dudit identifiant de la cellule à accès restreint dans une liste des cellules auxquelles ledit terminal mobile peut essayer de se connecter en situation de mobilité.

5. Procédé de paramétrage d'un terminal mobile, ce procédé étant destiné à être mis en œuvre par un serveur dans un réseau cellulaire, le procédé étant **caractérisé en ce qu'**il comporte :
- une étape (F10) de réception, par ledit serveur, d'un identifiant d'un utilisateur (U1), d'un identifiant (RAC1) d'une cellule à accès restreint dont l'accès est réservé à un ensemble fermé d'utilisateurs et autorisé pour cet utilisateur (U1), et d'au moins un identifiant (MC1) d'une zone de détection de ladite cellule à accès restreint, ladite zone de détection correspondant à la zone de couverture d'une cellule du réseau cellulaire et étant détectée par un point d'accès à la cellule à accès restreint, lesdits identifiants de l'utilisateur, de la cellule à accès restreint et de la zone de détection étant reçus en provenance du point d'accès à ladite cellule à accès restreint ;
- une étape de stockage desdits identifiants reçus (U1, MC1, RAC1) dans une base de données (26) du serveur ;
- une étape (F20) d'envoi par le serveur, à un terminal mobile (10) dudit utilisateur (U1), de l'identifiant (RAC1) de ladite cellule à accès restreint ; ledit procédé comprenant en outre une étape (F40) consistant à déterminer si ledit terminal mobile (10) se trouve dans une zone de détection d'une cellule à accès restreint, mais autorisé à un utilisateur (U1) du terminal (10) et si c'est le cas, une étape (F50) d'envoi dudit identifiant (RAC1) de cellule à accès restreint audit terminal mobile (10).

6. Programme d'ordinateur comportant des instructions pour l'exécution des étapes du procédé de paramétrage selon la revendication 5 lorsque ledit programme est exécuté par un ordinateur (20).

7. Système comprenant un serveur (20) selon l'une quelconque des revendications 1 à 4 ainsi qu'un point d'accès à une cellule à accès restreint dont l'accès est réservé à un ensemble fermé d'utilisateurs, ledit point d'accès étant paramétré avec des identifiants des utilisateurs autorisés à accéder à cette cellule à accès restreint, ledit point d'accès comprenant:
- des moyens pour détecter et identifier au moins une cellule d'un réseau cellulaire au voisinage de laquelle se trouve ledit point d'accès;
- des moyens pour envoyer, audit serveur dudit réseau cellulaire, un identifiant (RAC1) de ladite cellule à accès restreint, un identifiant de la ou les cellule(s) du réseau cellulaire détectée(s) et un identifiant d'au moins un utilisateur (U1) autorisé à accéder à ladite cellule à accès restreint.

8. Système selon la revendication 7 comprenant en outre un terminal mobile (10) d'un utilisateur (U1) autorisé à accéder à ladite cellule à accès restreint.

9. Système selon la revendication 8 dans lequel ledit terminal mobile (10) comporte :
- une base de données associant au moins un identifiant d'une zone de détection avec au moins un identifiant d'une cellule à accès restreint, mais autorisé à un utilisateur du terminal ;
- des moyens pour détecter que le terminal se trouve dans la zone de détection ; et
- des moyens pour ajouter, consécutivement à la détection, l'identifiant de la cellule à accès restreint dans une liste de cellules potentielles auxquelles le terminal peut essayer de se connecter.

10. Support d'informations lisibles par un ordinateur et comportant des instructions d'un programme d'ordinateur selon la revendication 6.

## Patentansprüche

1. Server (20) eines Mobilfunknetzes, wobei der Server **dadurch gekennzeichnet ist, dass** er aufweist:
- Mittel zum Empfang einer Kennung eines Benutzers (U1), einer Kennung einer Zelle mit eingeschränktem Zugang (RAC1), zu welcher der Zugang einer geschlossenen Menge von Benutzern vorbehalten ist und für diesen Benutzer (U1) erlaubt ist, und wenigstens einer Kennung (MC1) eines Detektionsbereichs der Zelle mit eingeschränktem Zugang, wobei dieser Detektionsbereich dem Versorgungsbereich einer Zelle des Mobilfunknetzes entspricht und von einem Zugangspunkt der Zelle mit eingeschränktem Zugang erkannt wird, wobei die Kennungen des Benutzers, der Zelle mit eingeschränktem Zugang und des Detektionsbereichs durch die Mittel zum Empfang von dem Zugangspunkt der Zelle mit eingeschränktem Zugang empfangen werden;
- Mittel zur Speicherung (26) der empfangenen Kennungen (U1, MC1, RAC1);
- Mittel (14; 24) zum Senden der Kennung (RAC1) der Zelle mit eingeschränktem Zugang an ein mobiles Endgerät (10) des Benutzers (U1), wobei der Server außerdem Mittel (21) aufweist, um zu erkennen, dass sich das mobile Endgerät (10) in einem Detektionsbereich einer Zelle mit eingeschränktem, jedoch für einen Benutzer (U1) des Endgerätes (10) erlaubtem Zugang befindet, und dadurch, dass die Mittel (14) zum Senden der Kennung (RAC1) der Zelle mit eingeschränktem Zugang an das mobile Endgerät (10) aktiviert werden, wenn sich das mobile Endgerät (10) in dem Detektionsbereich befindet.

2. Server nach Anspruch 1, wobei die Mittel (24) zum Senden der Kennung (RAC1) der Zelle mit eingeschränktem Zugang außerdem ermöglichen, die Kennung (MC1) des Detektionsbereichs der Zelle mit eingeschränktem Zugang an das mobile Endgerät (10) zu senden,
und wobei die Mittel (24) zum Senden periodisch und/oder im Fall einer Änderung wenigstens einer der in den Mitteln zur Speicherung (26) gespeicherten Kennungen aktiviert werden.

3. Server nach Anspruch 1, wobei die Mittel zum Senden dafür ausgelegt sind, die Kennung der Zelle mit eingeschränktem Zugang und die Kennung des Detektionsbereichs der Zelle mit eingeschränktem Zugang in einer Nachricht über das Mobilfunknetz an das mobile Endgerät zu senden.

4. Server nach Anspruch 1 oder 2, wobei die Mittel zum Senden dafür ausgelegt sind, an das mobile Endgerät über das Mobilfunknetz eine Nachricht zu senden, welche die Hinzufügung, durch das mobile Endgerät, der Kennung der Zelle mit eingeschränktem Zugang zu einer Liste der Zellen auslöst, mit denen das mobile Endgerät in einer Mobilitätssituation versuchen kann, sich zu verbinden.

5. Verfahren zur Parametrierung eines mobilen Endgerätes, wobei dieses Verfahren dazu bestimmt ist, von einem Server in einem Mobilfunknetz durchgeführt zu werden, wobei das Verfahren **dadurch gekennzeichnet ist, dass** es umfasst:
- einen Schritt (F10) des Empfangs, durch den Server, einer Kennung eines Benutzers (U1), einer Kennung (RAC1) einer Zelle mit eingeschränktem Zugang, zu welcher der Zugang einer geschlossenen Menge von Benutzern vorbehalten ist und für diesen Benutzer (U1) erlaubt ist, und wenigstens einer Kennung (MC1) eines Detektionsbereichs der Zelle mit eingeschränktem Zugang, wobei dieser Detektionsbereich dem Versorgungsbereich einer Zelle des Mobilfunknetzes entspricht und von einem Zugangspunkt der Zelle mit eingeschränktem Zugang erkannt wird, wobei die Kennungen des Benutzers, der Zelle mit eingeschränktem Zugang und des Detektionsbereichs von dem Zugangspunkt der Zelle mit eingeschränktem Zugang empfangen werden;
- einen Schritt der Speicherung der empfangenen Kennungen (U1, MC1, RAC1) in einer Datenbank (26) des Servers;
- einen Schritt (F20) des Sendens der Kennung (RAC1) der Zelle mit eingeschränktem Zugang durch den Server an ein mobiles Endgerät (10) des Benutzers (U1);
wobei das Verfahren außerdem einen Schritt (F40) umfasst, der darin besteht zu bestimmen, ob sich das mobile Endgerät (10) in einem Detektionsbereich einer Zelle mit eingeschränktem, jedoch für einen Benutzer (U1) des Endgerätes (10) erlaubtem Zugang befindet, und wenn dies der Fall ist, einen Schritt (F50) des Sendens der Kennung (RAC1) der Zelle mit eingeschränktem Zugang an das mobile Endgerät (10).

6. Computerprogramm, welches Anweisungen zur Ausführung der Schritte des Verfahrens zur Parametrierung nach Anspruch 5, wenn das Programm von einem Computer (20) ausgeführt wird, umfasst.

7. System, welches einen Server (20) nach einem der Ansprüche 1 bis 4 sowie einen Zugangspunkt einer Zelle mit eingeschränktem Zugang, zu welcher der Zugang einer geschlossenen Menge von Benutzern vorbehalten ist, umfasst, wobei der Zugangspunkt mit Kennungen der Benutzer parametrisiert ist, die zum Zugang zu dieser Zelle mit eingeschränktem Zugang berechtigt sind, wobei der Zugangspunkt umfasst:
- Mittel zum Erkennen und Identifizieren wenigstens einer Zelle eines Mobilfunknetzes, in deren Nähe sich der Zugangspunkt befindet;
- Mittel zum Senden, an den Server des Mobilfunknetzes, einer Kennung (RAC1) der Zelle mit eingeschränktem Zugang, einer Kennung der erkannten Zelle oder Zellen des Mobilfunknetzes und einer Kennung wenigstens eines Benutzers (U1), der zum Zugang zu der Zelle mit eingeschränktem Zugang berechtigt ist.

8. System nach Anspruch 7, welches außerdem ein mobiles Endgerät (10) eines Benutzers (U1) umfasst, der zum Zugang zu der Zelle mit eingeschränktem Zugang berechtigt ist.

9. System nach Anspruch 8, wobei das mobile Endgerät (10) aufweist:
- eine Datenbank, die wenigstens eine Kennung eines Detektionsbereichs mit wenigstens einer Kennung einer Zelle mit eingeschränktem, jedoch für einen Benutzer des Endgerätes erlaubtem Zugang verknüpft;
- Mittel zum Erkennen, dass sich das Endgerät in dem Detektionsbereich befindet; und
- Mittel zum Hinzufügen, im Anschluss an die Erkennung, der Kennung der Zelle mit eingeschränktem Zugang zu einer Liste potentieller Zellen, mit denen das Endgerät versuchen kann, sich zu verbinden.

10. Computerlesbares Speichermedium, welches Anweisungen eines Computerprogramms nach Anspruch 6 umfasst.

## Claims

1. Server (20) of a cellular network, said server being **characterized in that** it includes:
- means for receiving an identifier of a user (U1), an identifier of a restricted-access cell (RAC1), access to which is reserved for a closed set of users and is authorized for this user (U1), and at least one identifier (MC1) of a detection area of said restricted-access cell, said detection area corresponding to the coverage area of a cell of the cellular network and being detected by an access point for the restricted-access cell, said identifiers of the user, of the restricted-access cell and of the detection area being received by the receiving means from the access point for said restricted-access cell;
- means (26) for storing said received identifiers (U1, MC1, RAC1);
- means (14; 24) for sending said identifier (RAC1) of said restricted-access cell to a mobile terminal (10) of said user (U1), said server further including means (21) for detecting that said mobile terminal (10) is in a detection area of a restricted-access cell, access to which is, however, authorized for a user (U1) of the terminal (10), and **in that** said means (14) for sending said restricted-access cell identifier (RAC1) to said mobile terminal (10) are activated when said mobile terminal (10) is in said detection area.

2. Server according to Claim 1, wherein said means (24) for sending said identifier (RAC1) of said restricted-access cell also allow said identifier (MC1) of said detection area of said restricted-access cell to be sent to said mobile terminal (10),
and wherein said sending means (24) are activated periodically and/or in the event that at least one of the identifiers stored in said storage means (26) changes.

3. Server according to Claim 1, wherein the sending means are configured to send to the mobile terminal said identifier of the restricted-access cell and said identifier of the detection area of said restricted-access cell in a message over the cellular network.

4. Server according to Claim 1 or 2, wherein the sending means are configured to send to the mobile terminal, over the cellular network, a message triggering the addition, by said mobile terminal, of said identifier of the restricted-access cell to a list of the cells to which said mobile terminal can try to connect in a mobility situation.

5. Method for parametrizing a mobile terminal, this method being intended to be implemented by a server in a cellular network, the method being **characterized in that** it includes:
- a step (F10) of said server receiving an identifier of a user (U1), an identifier (RAC1) of a restricted-access cell, access to which is reserved for a closed set of users and is authorized for this user (U1), and at least one identifier (MC1) of a detection area of said restricted-access cell, said detection area corresponding to the coverage area of a cell of the cellular network and being detected by an access point for the restricted-access cell, said identifiers of the user, of the restricted-access cell and of the detection area being received from the access point for said restricted-access cell;
- a step of storing said received identifiers (U1, MC1, RAC1) in a database (26) of the server;
- a step (F20) of the server sending the identifier (RAC1) of said restricted-access cell to a mobile terminal (10) of said user (U1);
said method further comprising a step (F40) of determining whether said mobile terminal (10) is in a detection area of a restricted-access cell, access to which is, however, authorized for a user (U1) of the terminal (10) and, if so, a step (F50) of sending said restricted-access cell identifier (RAC1) to said mobile terminal (10).

6. Computer program including instructions for executing the steps of the parametrizing method according to Claim 5 when said program is executed by a computer (20).

7. System comprising a server (20) according to any one of Claims 1 to 4 and also an access point for a restricted-access cell, access to which is reserved for a closed set of users, said access point being parametrized with identifiers of the users authorized to access said restricted-access cell, said access point comprising:
- means for detecting and identifying at least one cell of a cellular network in the vicinity of which said access point is located;
- means for sending an identifier (RAC1) of said restricted-access cell, an identifier of the one or more detected cells of the cellular network and an identifier of at least one user (U1) authorized to access said restricted-access cell to said server of said cellular network.

8. System according to Claim 7, further comprising a mobile terminal (10) of a user (U1) authorized to access said restricted-access cell.

9. System according to Claim 8, wherein said mobile terminal (10) includes:
- a database, which associates at least one identifier of a detection area with at least one identifier of a restricted-access cell, access to which is, however, authorized for a user of the terminal;
- means for detecting that the terminal is in the detection area; and
- means for adding, subsequent to the detection, the identifier of the restricted-access cell to a list of potential cells to which the terminal can try to connect.

10. Computer-readable information medium including instructions of a computer program according to Claim 6.
